# DEMANDE DE BREVET EUROPEEN

(11) **EP 4 570 138 A1**
(43) Date de publication de la demande: **18.06.2025**
(21) Numéro de dépôt: 24218588.2
(22) Date de dépôt: 10.12.2024
(51) Int. Cl.: A47J 27/08, A47J 36/16, A47J 37/06

(54) **APPAREIL DE PRÉPARATION CULINAIRE**

(30) Priorité: 11.12.2023 FR 2313948
(71) Demandeur: SEB S.A., 69130 Ecully (FR)
(72) Inventeur: TURPIN, Romain, 69134 ECULLY CEDEX (FR); DUMOUX, Philippe, 69134 ECULLY CEDEX (FR)
(74) Mandataire: SEB Développement

(57) **Abrégé**

Appareil de préparation culinaire agencé pour proposer au moins un premier mode de cuisson comprenant une étape de cuisson sous pression et au moins un deuxième mode de cuisson comprenant une étape de chauffage des aliments par convection, l'appareil de préparation culinaire comprenant au moins :
- un boîtier (10),
- une cuve (30),
- un couvercle principal (20), mobile entre une position de fermeture et une position d'ouverture,
- des moyens d'étanchéité amovibles, agencés entre le boîtier (10) et le couvercle principal (20) pour permettre le premier mode de cuisson,

dans lequel la cuve (30) comprend au moins une poignée de cuve (30A), ladite au moins une poignée de cuve (30A) étant agencée entre le boîtier (10) et le couvercle principal (20),
caractérisé en ce que le couvercle principal (20) comprend un dégagement se situant au-dessus de l'au moins une poignée de cuve (30A).

## Description

### Domaine technique de l'invention

La présente invention concerne de manière générale un appareil de préparation culinaire, et plus particulièrement un couvercle interne amovible d'appareil de préparation culinaire.

### État de la technique

Il est connu dans l'art antérieur des appareils de préparation culinaire électriques permettant des modes de cuisson sous pression et de cuisson par convection. Afin d'opérer une cuisson sous pression, un couvercle interne amovible peut être ajouté au couvercle principal de l'appareil de préparation culinaire pour étanchéifier l'espace de cuisson accueillant les aliments à cuire : il n'y a pas de fuite d'air ou de vapeur de l'espace de cuisson. En revanche, si les moyens de chauffage et de ventilation nécessaires à la cuisson par convection sont prévus dans le couvercle principal, une circulation d'air chaud entre le couvercle principal et l'espace de cuisson est nécessaire et le couvercle interne doit être retiré. Bien que des évents soient généralement prévus pour évacuer un flux d'air et de vapeur chaud issu de la cuisson des aliments par convection, ce système en l'absence du couvercle interne peut présenter des fuites, particulièrement au niveau des poignées de cuve, c'est-à-dire entre le couvercle principal et les poignées de cuve. Ainsi, les poignées de cuve peuvent présenter à la longue une température exposant l'utilisateur manipulant la cuve pendant ou peu après la cuisson, à un inconfort ou même à un risque de brûlure.

### Exposé de l'invention

Un but de la présente invention est de répondre aux inconvénients de l'art antérieur mentionnés ci-dessus et en particulier, tout d'abord, de proposer un appareil de préparation culinaire qui propose au moins un premier mode de cuisson comprenant une étape de cuisson sous pression des aliments et au moins un deuxième mode de cuisson comprenant une étape de chauffage des aliments par circulation d'air chaud et dont le fonctionnement et/ou l'utilisation ne présentent aucun risque d'inconfort ou de brûlure pour l'utilisateur.

Pour cela un premier aspect de l'invention concerne un appareil de préparation culinaire agencé pour proposer au moins un premier mode de cuisson comprenant une étape de cuisson sous pression des aliments et au moins un deuxième mode de cuisson comprenant une étape de chauffage des aliments par circulation d'air chaud, l'appareil de préparation culinaire comprenant au moins :
- un boîtier,
- un logement ménagé dans le boîtier,
- une cuve définissant un espace de travail destiné à recevoir des aliments pour la réalisation de la préparation culinaire, et agencée pour être reçue dans le logement du boîtier,
- un couvercle principal, mobile entre une position de fermeture dans laquelle un accès vers l'espace de travail est interdit et une position d'ouverture dans laquelle l'accès vers l'espace de travail est autorisé,
- des moyens d'étanchéité amovibles, prévus :
- pour être agencés entre le boîtier ou la cuve et le couvercle principal, pour permettre le premier mode de cuisson comprenant une étape de cuisson sous pression lorsque le couvercle principal occupe sa position de fermeture, et
- pour être retirés d'entre le boîtier ou la cuve et le couvercle principal, pour permettre le deuxième mode de cuisson lorsque le couvercle principal occupe sa position de fermeture, ménageant ainsi un passage pour un flux d'air chaud entre le boîtier et le couvercle principal,
dans lequel la cuve comprend au moins une poignée de cuve, ladite au moins une poignée de cuve étant en tout ou partie agencée entre le boîtier et le couvercle principal lorsque la cuve est reçue dans l'espace de cuisson, caractérisé en ce que le couvercle principal comprend un dégagement se situant au-dessus de l'au moins une poignée de cuve lorsque le couvercle principal est dans sa position de fermeture. Le dégagement peut se présenter sous la forme d'une zone libre ou d'une découpe, ce qui garantit qu'il n'y a aucune paroi ou obstacle au-dessus des poignées de cuve qui pourrait retenir un flux d'air chaud, au moins au-dessus d'une extrémité des poignées de cuve (typiquement la partie à prendre en main ou à prendre entre ses doigts pour manipuler la cuve). L'absence de paroi ou d'obstacle au-dessus des poignées de cuve permet l'établissement d'un flux convectif de refroidissement formé par de l'air ambiant, la chaleur de ladite au moins une interface de manipulation est dissipée par l'air ambiant. Le dégagement garantit ainsi que le flux d'air chaud n'effleure pas les poignées de cuve, et s'éloigne par le haut dès sa sortie du passage entre le couvercle principal et le boîtier.

L'appareil de préparation culinaire peut en outre présenter une ou plusieurs des caractéristiques suivantes, prises seules ou en combinaison.

Selon un mode de réalisation, le couvercle principal et/ou l'appareil de préparation culinaire et/ou le boîtier est exempt de paroi et/ou d'obstacle et/ou d'organe interne et/ou de nervure, et/ou de rebord au-dessus de ladite au moins une poignée de cuve, en particulier au-dessus des extrémités de la poignée de cuve. Autrement dit, le couvercle principal et/ou l'appareil de préparation culinaire et/ou le boîtier est prévu pour laisser un accès totalement libre au-dessus de ladite au moins une poignée de cuve, en particulier au-dessus des extrémités et/ou de la partie à saisir de la poignée de cuve. En d'autres termes, une zone verticale au-dessus de ladite au moins une poignée de cuve, en particulier au-dessus des extrémités et/ou de la partie à saisir de la poignée de cuve est laissée libre par le couvercle principal et/ou l'appareil de préparation culinaire et/ou le boîtier.

Selon un mode de réalisation, le dégagement se situant au-dessus de l'au moins une poignée de cuve laisse libre ou découverte une zone d'au moins deux, et de préférence d'au moins trois centimètres au-dessus des poignes de cuve (en partant de leur extrémité).

Selon un mode de réalisation, les moyens d'étanchéité amovibles comprennent au moins une poignée de moyens d'étanchéité amovibles, et au cours du premier mode de cuisson, ladite au moins une poignée de moyens d'étanchéité amovibles est agencée dans le dégagement, de préférence pour recouvrir ladite au moins une poignée de cuve. Une partie centrale des moyens d'étanchéité peut présenter une grande température après une cuisson sous pression. Les poignées des moyens d'étanchéité, typiquement situées à l'extérieur de l'appareil, assurent une manipulation sûre des moyens d'étanchéité sans risque de brûlure, particulièrement durant des cuissons nécessitant à la fois une étape de cuisson sous pression puis une étape de cuisson par convection.

Selon un mode de réalisation, le boîtier comprend au moins une poignée de boîtier agencée sous ladite au moins une poignée de cuve. On peut prévoir deux poignées de cuve et deux poignées de boîtier qui permettent de déplacer le boîtier de manière pratique, et plus généralement l'ensemble de l'appareil de préparation culinaire.

Selon un mode de réalisation, dans le premier mode de cuisson, ladite au moins une poignée de moyens d'étanchéité amovibles est agencée en regard de ladite au moins une poignée de boîtier. En d'autres termes, ladite au moins une poignée de moyens d'étanchéité coiffe les poignées de boîtier, ladite au moins une poignée de moyens d'étanchéité présente une forme complémentaire aux poignées de boîtier. Cet agencement contribue à améliorer l'ergonomie de l'appareil, puisqu'il rend possible un déplacement aisé de l'appareil de préparation culinaire grâce au contact de tous les doigts des deux mains de l'utilisateur qui peuvent pincer les poignées de boîtier et/ou de moyens d'étanchéité.

Selon un mode de réalisation, l'appareil de préparation culinaire comprend un espace entre la poignée de cuve et le boîtier et/ou les poignées de boîtier. En particulier, le boîtier (ou ses parois latérales) peut définir une enveloppe de boîtier, et les poignées de cuve peuvent s'étendre au-delà de l'enveloppe de boîtier, ou peuvent être prévues en retrait de l'enveloppe de boîtier ou au même niveau que l'enveloppe de boîtier (c'est-à-dire affleurer l'enveloppe du boîtier). Cet espace libre permet à l'utilisateur de glisser ses doigts sous la poignée de cuve afin de saisir la cuve de manière ergonomique, sans avoir à pincer la cuve pour pouvoir la soulever.

Selon un mode de réalisation, dans le premier mode de cuisson, le passage pour le flux d'air chaud est agencé pour être occupé et/ou obturé par les moyens d'étanchéité amovibles.

Selon un mode de réalisation, les moyens d'étanchéité amovibles forment un couvercle interne prévu pour être relié ou accouplé de manière amovible au couvercle principal. On peut prévoir tout type d'accouplement réversible (crochets coulissants ou basculants, rotation 1/4 de tour, à baïonnette, accouplement par vissage...).

Selon un mode de réalisation, les moyens d'étanchéité amovibles comprennent :
- une soupape de régulation de pression, et/ou
- un moyen de sécurité à l'ouverture/fermeture constitué par un système de tige manométrique du type doigt d'Aroma, et/ou
- une soupape de sécurité, et/ou
- un joint d'étanchéité agencé pour épouser une périphérie du boîtier ou de la cuve. On peut bien entendu prévoir des passages correspondants dans le couvercle principal.

Selon un mode de réalisation, le couvercle principal comprend des moyens de chauffage et/ou des moyens de ventilation de cuisson disposés entre le couvercle principal et les moyens d'étanchéité amovibles lorsque les moyens d'étanchéité amovibles sont agencés entre le boîtier ou la cuve et le couvercle principal pour permettre le premier mode de cuisson. Les moyens de chauffage et/ou des moyens de ventilation de cuisson sont agencés entre le couvercle principal et l'espace de cuisson, et plus généralement, les moyens de chauffage et/ou des moyens de ventilation de cuisson sont agencés au-dessus de l'espace de cuisson lorsque le couvercle principal est en position de fermeture.

Selon un mode de réalisation, dans le premier mode de cuisson, ladite au moins une poignée de moyens d'étanchéité amovibles forme des poignées du couvercle principal lorsque les moyens d'étanchéité amovibles sont agencés entre le boîtier ou la cuve et le couvercle principal pour permettre le premier mode de cuisson.

### Description des figures

D'autres caractéristiques et avantages de la présente invention apparaîtront plus clairement à la lecture de la description détaillée qui suit d'un mode de réalisation de l'invention donné à titre d'exemple nullement limitatif et illustré par les dessins annexés, dans lesquels :
[fig. 1] représente un appareil de préparation culinaire selon la présente invention, prévu pour proposer au moins un premier mode de cuisson comprenant une étape de cuisson sous pression des aliments et au moins un deuxième mode de cuisson comprenant une étape de chauffage des aliments par circulation d'air chaud, comprenant un boîtier et un couvercle principal fermé sur le boîtier, et dans une configuration pour proposer le deuxième mode de cuisson ;
[fig. 2] représente un détail de poignées de l'appareil de préparation culinaire dans sa disposition de la figure 1 ;
[fig. 3] représente l'appareil de préparation culinaire électrique selon la présente invention dont le couvercle principal est fermé et dans une configuration pour proposer le premier mode de cuisson, c'est-à-dire avec un couvercle interne amovible installé entre le boîtier et le couvercle principal ;
[fig. 4] représente un détail des poignées de l'appareil de préparation culinaire dans sa disposition de la figure 3 ;
[fig. 5] représente une vue éclatée de l'appareil de préparation culinaire du couvercle principal et du couvercle interne amovible dont le couvercle principal est ouvert.

### Description détaillée de mode(s) de réalisation

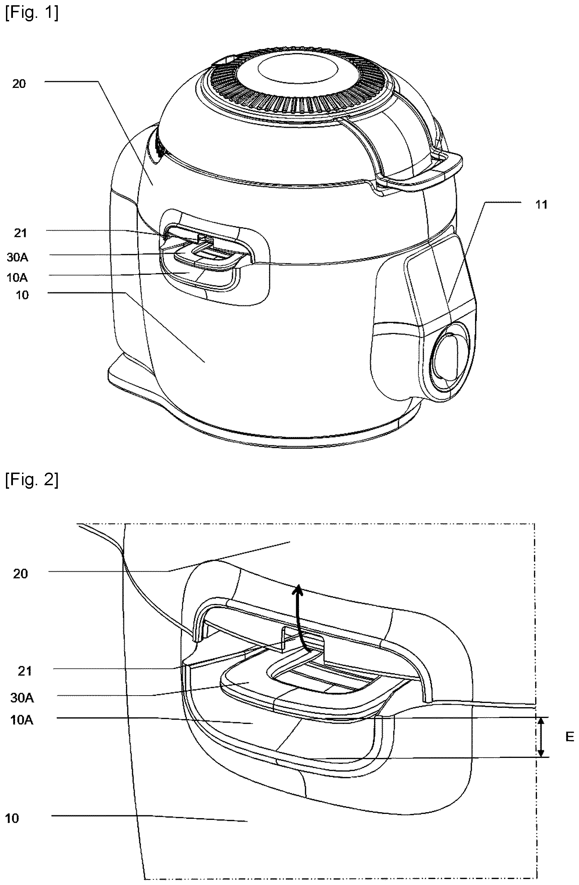

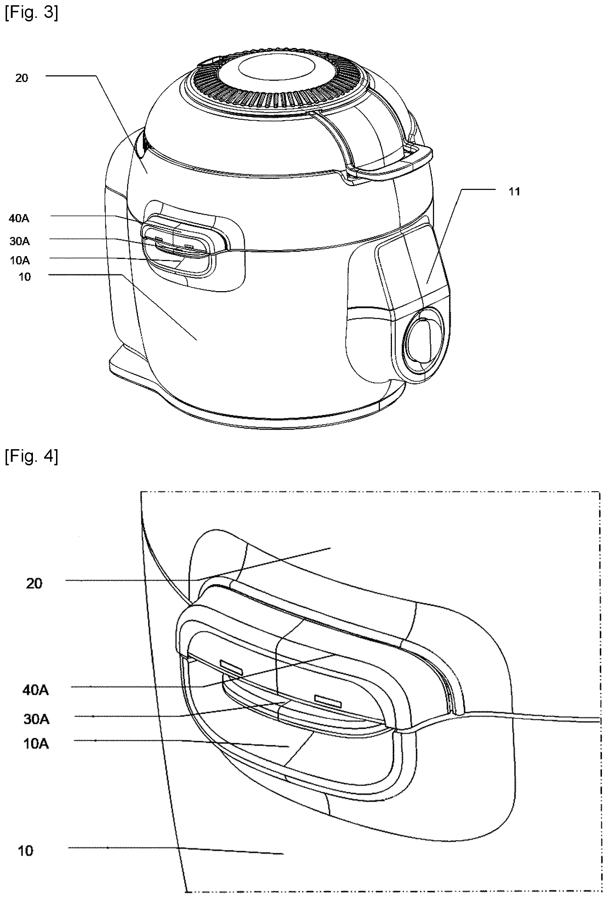

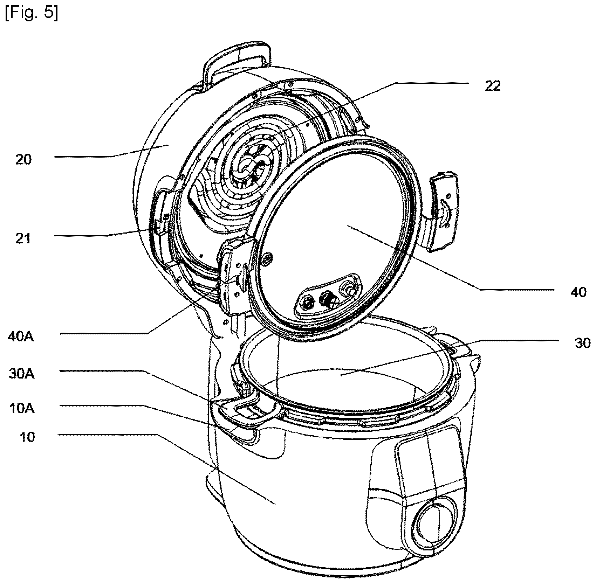

La figure 1 représente un appareil de préparation culinaire selon la présente invention, comprenant un boîtier 10 fermé par un couvercle principal 20. Une enveloppe générale définit la forme extérieure du boîtier 10. Il s'agit de l'ensemble des parois extérieures du boîtier 10 formant une enveloppe sensiblement cylindrique dans l'exemple représenté. Le couvercle principal 20 est articulé sur le boîtier 10 et peut ouvrir ou fermer un logement formé dans le boîtier 10 et pouvant recevoir une cuve et/ou définir espace de cuisson. On peut voir le couvercle principal 20 en position de fermeture figures 1 et 3, et en position d'ouverture figure 5.

L'appareil de préparation culinaire est typiquement un appareil électrique agencé pour pouvoir conduire ou proposer au moins deux modes de cuisson : au moins un mode de cuisson sous pression et au moins un mode de cuisson par convection. Les modes de cuisson sont sélectionnables sur une interface homme-machine 11, qui peut avoir la forme d'un écran tactile, et/ou d'une molette et/ou de boutons.

Le boîtier 10 comprend des poignées de boîtier 10A afin de déplacer facilement l'appareil de préparation culinaire. Dans la configuration de la figure 1, l'appareil de préparation culinaire comprend donc un logement à l'intérieur du boîtier 10 qui reçoit une cuve 30 (visible figure 5), dont est visible une poignée de cuve 30A. Les poignées de cuve 30A débordent ou sont en protubérance par rapport à l'enveloppe générale du boîtier 10 ; particulièrement, les poignées de cuve 30A sont agencées à l'extérieur de la surface contenant les parois immédiatement adjacentes aux poignées de cuve 30A, nonobstant les poignées de boîtier 10A (considérées aussi en protubérance par rapport à l'enveloppe de boîtier définie par la paroi latérale du boîtier 10). Ainsi, les poignées de cuve 30A sont peu affectées par les températures élevées imposées dans la cuve 30 et nécessaires à la cuisson des aliments. Cette mise en oeuvre permet un meilleur confort d'utilisation lors de la préhension des poignées de cuve 30A. Alternativement, les poignées de cuve 30A pourraient être agencées en retrait, c'est-à-dire à l'intérieur, de l'enveloppe de boîtier 10. Alternativement, les poignées de cuve 30A pourraient être agencées à un niveau similaire à celui de l'enveloppe de boîtier 10.

Enfin, dans la configuration de la figure 1, l'appareil de préparation culinaire est prévu pour conduire le mode de cuisson par convection, c'est-à-dire sans mise sous pression de l'espace de cuisson.

On peut noter la présence d'un passage 21 au-dessus de la poignée de cuve 30A et entre le boîtier 10 et le couvercle principal 20 qui permet une évacuation d'un flux d'air chaud typiquement issu de la cuisson des aliments dans la cuve 30.

Le couvercle principal 20 est prévu avec un dégagement au-dessus des poignées de cuve 30A, c'est-à-dire qu'on peut constater une absence d'obstacle ou de paroi sur le couvercle principal 20, à la sortie, en regard ou au-dessus du passage 21, ce qui peut laisser le flux chaud circulant dans le passage 21 se dissiper en montant immédiatement en sortie du passage 21 dans l'air ambiant plus froid. Ainsi, le flux d'air chaud n'atteint pas la poignée de cuve 30A, située au-delà du passage 21 et/ou en dessous du passage 21.

La figure 2 représente une vue détaillée des poignées de l'appareil de préparation culinaire de la figue 1. La cuve 30 est agencée de telle sorte qu'il existe un espace E entre la poignée de cuve 30A et la poignée de boîtier 10A, assez grand pour permettre le passage des doigts d'un utilisateur sous la poignée de cuve 30A pour retirer la cuve 30 du boîtier 10.

On peut noter que grâce au dégagement du couvercle principal 20, les extrémités des poignées de cuve 30A ne sont pas recouvertes ni cachées par une quelconque paroi ou rebord du couvercle principal 20. En particulier, on peut considérer que les deux ou trois derniers centimètres au moins des poignées de cuve 30A sont laissés totalement découverts par le couvercle principal 20, si bien que de l'air chaud qui s'échappe du passage 21 peut s'élever dans l'atmosphère ambiante sans lécher ni chauffer les poignées de cuve 30A.

La figure 3 représente l'appareil de préparation culinaire de la figure 1 dans la configuration pour conduire le mode de cuisson avec une cuisson sous pression.

A cet effet, l'appareil de préparation culinaire est équipé de moyens d'étanchéité amovibles présents sous la forme d'un couvercle interne amovible 40 (visible figure 5), dont on peut noter la présence de poignées de moyens d'étanchéité amovibles 40A au-dessus des poignées de cuve 30A sur la figure 3.

Le couvercle interne amovible 40 peut s'accoupler dans le couvercle principal 20 afin d'étanchéifier l'espace de cuisson dans l'appareil de préparation culinaire et permettre une cuisson sous pression dans la cuve 30. L'accouplement entre le couvercle interne amovible 40 et le couvercle principal 20 est prévu réversible pour autoriser une mise en configuration rapide et aisée.

A cet effet, le couvercle interne amovible 40 et le couvercle principal présentent des moyens de verrouillage complémentaires disposés en dehors de l'espace de cuisson entre l'espace de cuisson et le dégagement ménagé sur le couvercle principal. La présence du dégagement entraine une réduction significative de l'espace pour pouvoir disposer les moyens de verrouillage complémentaires.

Le dégagement, rendu inutile par l'étanchéité de l'espace de cuisson procurée par le couvercle interne amovible 40, est occupé par les poignées de moyens d'étanchéité amovibles 40A, permettant de manipuler plus facilement le boîtier en formant des poignées de boîtier supplémentaires, et permettant de manipuler également le couvercle interne amovible 40. Une fois le couvercle interne amovible 40 retiré, le dégagement est de nouveau libéré afin de permettre de manière plus efficace l'évacuation de l'air chaud pouvant transiter entre le couvercle principal 20 et l'espace de cuisson et ainsi limiter la montée en température des poignées de cuve 30A.

On peut noter que le passage 21, également rendu inutile par l'étanchéité de l'espace de cuisson procurée par le couvercle interne amovible 40, est occupé par le couvercle interne amovible 40 et sa liaison avec les poignées de moyens d'étanchéité amovibles 40A.

La figure 5 représente l'appareil de préparation culinaire avec un positionnement du couvercle principal 20 ouvert. Le couvercle interne amovible 40 est détaché (c'est-à-dire en cours de montage ou de démontage) pour bien montrer la structure interne.

En ce qui concerne le couvercle interne amovible 40 et son montage sur le couvercle principal, on peut noter ici que des gâchettes coulissantes sont prévues sur les poignées de moyens d'étanchéité amovibles 40A pour commander des crochets d'accouplement. On peut cependant prévoir tout autre type d'accouplement réversible (1/4 de tour, à baïonnette, par vissage... ).

On peut voir, avec cette position du couvercle interne amovible 40 représentée figure 5, que le couvercle principal 20 embarque des moyens de chauffage 22 agencés en regard de la cuve 30 de cuisson, de sorte à générer une convection avec les aliments à cuire (on peut prévoir typiquement une résistance chauffante et des moyens de ventilation de cuisson).

Le couvercle interne amovible 40 comprend quant à lui des organes de sécurité et de fonctionnement pour permettre une cuisson sous pression : une soupape de régulation de pression, un moyen de sécurité à l'ouverture/fermeture constitué par un système de tige manométrique du type doigt d'Aroma, une soupape de sécurité, et un joint d'étanchéité agencé pour épouser une périphérie du boîtier 10.

Le couvercle principal 20 peut être rabattu sur le boîtier 10 pour effectuer une cuisson.

Dans le cas de figure où le couvercle interne amovible 40 est accouplé (figures 3, 4), une cuisson sous pression est possible, et aucun flux d'air chaud ne passe par le passage 21, car l'espace de cuisson est rendu étanche par le couvercle interne amovible 40, occupant lui-même le passage 21.

Dans le cas de figure où le couvercle interne amovible 40 est démonté (figures 1, 2), une cuisson par convection est possible, et d'éventuels gaz chauds (typiquement des vapeurs de cuisson) peuvent s'échapper par le passage 21 sans toutefois chauffer les poignées de cuve 30A, en raison du dégagement du couvercle principal qui évite à ces gaz chauds de chauffer les poignées de cuve 30A. Le dégagement permet aussi à l'air ambiant de refroidir par lui-même les poignées de cuve 30A qui pourraient être chauffées par une conduction de chaleur depuis le corps de la cuve 30.

### Application industrielle

Un appareil de préparation culinaire selon la présente invention, et sa fabrication, sont susceptibles d'application industrielle.

On comprendra que diverses modifications et/ou améliorations évidentes pour l'homme du métier peuvent être apportées aux différents modes de réalisation de l'invention décrits dans la présente description sans sortir du cadre de l'invention. En particulier, on peut noter que le passage 21 pour un flux d'air chaud et le dégagement pourraient être situés ailleurs sur la périphérie du couvercle principal 20.

## Revendications

1. Appareil de préparation culinaire agencé pour proposer au moins un premier mode de cuisson comprenant une étape de cuisson sous pression des aliments et au moins un deuxième mode de cuisson comprenant une étape de chauffage des aliments par circulation d'air chaud, l'appareil de préparation culinaire comprenant au moins :
- un boîtier (10),
- un logement ménagé dans le boîtier (10),
- une cuve (30) définissant un espace de travail destiné à recevoir des aliments pour la réalisation de la préparation culinaire, et agencée pour être reçue dans le logement du boîtier (10),
- un couvercle principal (20), mobile entre une position de fermeture dans laquelle un accès vers l'espace de travail est interdit et une position d'ouverture dans laquelle l'accès vers l'espace de travail est autorisé,
- des moyens d'étanchéité amovibles, prévus :
- pour être agencés entre le boîtier (10) ou la cuve (30) et le couvercle principal (20), pour permettre le premier mode de cuisson comprenant une étape de cuisson sous pression lorsque le couvercle principal (20) occupe sa position de fermeture, et
- pour être retirés d'entre le boîtier (10) ou la cuve (30) et le couvercle principal (20), pour permettre le deuxième mode de cuisson lorsque le couvercle principal (20) occupe sa position de fermeture, ménageant ainsi un passage (21) pour un flux d'air chaud entre le boîtier (10) et le couvercle principal (20),
dans lequel la cuve (30) comprend au moins une poignée de cuve (30A), ladite au moins une poignée de cuve (30A) étant en tout ou partie agencée entre le boîtier (10) et le couvercle principal (20) lorsque la cuve (30) est reçue dans l'espace de cuisson,
**caractérisé en ce que** le couvercle principal (20) comprend un dégagement se situant au-dessus de l'au moins une poignée de cuve (30A) lorsque le couvercle principal (20) est dans sa position de fermeture.

2. Appareil de préparation culinaire selon la revendication 1, dans lequel les moyens d'étanchéité amovibles comprennent au moins une poignée de moyens d'étanchéité amovibles (40A),
et dans lequel, au cours du premier mode de cuisson, ladite au moins une poignée de moyens d'étanchéité amovibles (40A) est agencée dans le dégagement, de préférence pour recouvrir ladite au moins une poignée de cuve (30A).

3. Appareil de préparation culinaire selon la revendication 2, dans lequel le boîtier (10) comprend au moins une poignée de boîtier (10A) agencée sous ladite au moins une poignée de cuve (30A).

4. Appareil de préparation culinaire selon la revendication 3, dans lequel dans le premier mode de cuisson, ladite au moins une poignée de moyens d'étanchéité amovibles (40A) est agencée en regard de ladite au moins une poignée de boîtier (10A).

5. Appareil de préparation culinaire selon l'une des revendications 3 ou 4, comprenant un espace (E) entre la poignée de cuve (30A) et le boîtier (10) et/ou ladite au moins une poignée de boîtier (10A).

6. Appareil de préparation culinaire selon l'une des revendications 1 à 5, dans lequel, dans le premier mode de cuisson, le passage (21) pour le flux d'air chaud est agencé pour être occupé et/ou obturé par les moyens d'étanchéité amovibles.

7. Appareil de préparation culinaire selon l'une des revendications 1 à 6, dans lequel les moyens d'étanchéité amovibles forment un couvercle interne (40) prévu pour être relié de manière amovible au couvercle principal (20).

8. Appareil de préparation culinaire selon l'une des revendications 1 à 7, dans lequel les moyens d'étanchéité amovibles comprennent :
- une soupape de régulation de pression, et/ou
- un moyen de sécurité à l'ouverture/fermeture constitué par un système de tige manométrique du type doigt d'Aroma, et/ou
- une soupape de sécurité, et/ou
- un joint d'étanchéité agencé pour épouser une périphérie du boîtier (10) ou de la cuve (30).

9. Appareil de préparation culinaire selon l'une des revendications 1 à 8, dans lequel le couvercle principal (20) comprend des moyens de chauffage (22) et/ou des moyens de ventilation de cuisson disposés entre le couvercle principal (20) et les moyens d'étanchéité amovibles lorsque les moyens d'étanchéité amovibles sont agencés entre le boîtier (10) ou la cuve (30) et le couvercle principal (20) pour permettre le premier mode de cuisson.

10. Appareil de préparation culinaire selon l'une des revendications 2 à 5 ou selon l'une des revendications 6 à 9 dans leur dépendance à la revendication 2, dans lequel, dans le premier mode de cuisson, ladite au moins une poignée de moyens d'étanchéité amovibles (40A) forme des poignées du couvercle principal (20) lorsque les moyens d'étanchéité amovibles sont agencés entre le boîtier (10) ou la cuve (30) et le couvercle principal (20) pour permettre le premier mode de cuisson.
